Europäisches Patentamt

**European Patent Office**

**Office européen des brevets**

(11) Veröffentlichungsnummer: **0 193 733**
**B1**

(12) # EUROPÄISCHE PATENTSCHRIFT

(45) Veröffentlichungstag der Patentschrift:
19.04.89

(21) Anmeldenummer: **86101200.3**

(22) Anmeldetag: **30.01.86**

(51) Int. Cl.⁴: **H 04 B 3/03,** H 04 B 3/36,
**H 04 M 1/58**

(54) **Verfahren zur Anpassung einer Gabelverstärkerschaltung an eine Fernmeldeleitung und Einrichtung zur Durchführung des Verfahrens.**

(30) Priorität: **05.03.85 DE 3507661**

(43) Veröffentlichungstag der Anmeldung:
**10.09.86 Patentblatt 86/37**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**GB-A-2 139 055**
**US-A-3 860 769**
**US-A-4 278 848**

**PATENTS ABSTRACTS OF JAPAN, Band 6, Nr. 9 (E-90) 887 , 20. Januar 1982; & JP - A - 56 131 235 (NIPPON DENSHIN DENWA KOSHA) 14-10-1981**

(73) Patentinhaber: **Neumann Elektronik GmbH, Bülowstrasse 104 - 110, D-4330 Mülheim 1 (DE)**

(72) Erfinder: **Neumann, Dirk, Dipl.- Ing., Schemelsbruch 11, D-4330 Mülheim 1 (DE)**

(74) Vertreter: **Feder, Heinz, Dr., Dipl.- Ing. P.- C. Sroka, Dr. H. Feder Dipl.- Phys. Dr. W.- D. Feder, Patentanwälte Dominikanerstrasse 37, D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Anpassung einer Gabelverstärkerschaltung an eine Fernmeldeleitung, bei welcher die mit ihrem bidirektionalen Hauptzweig an die Fernmeldeleitung angeschlossene Gabelschaltung an ihrer dem Hauptzweig gegenüberliegenden Seite mit einem Nachbildungsnetzwerk abgeschlossen ist, das einstellbare Impedanzen enthält und bei der in jedem der beiden Nebenzweige eine Verstärkerschaltung angeordnet ist und die beiden Nebenzweige an ihren von der Gabelschaltung abgewandten Enden gekoppelt sind, bei welchem dem einen Nebenzweig der Gabelschaltung ein Prüfsignal zugeführt wird und der in den anderen Nebenzweig der Gabelschaltung in Abhängigkeit von der Gabelübergangsdämpfung übertretende Anteil des Signalpegels fortlaufend gemessen wird, wobei vor jeder Messung die einstellbaren Impedanzen in vorgegebener Weise auf einen anderen Wert eingestellt werden und die erhaltenen Meßwerte des übergetretenen Anteils des Signalpegels miteinander verglichen und den entsprechenden Impedanzwerten zugeordnet werden und nach einer vorgegebenen Anzahl von Messungen das Nachbildungsnetzwerk auf einen Impedanzwert fest eingestellt wird, der dem kleinsten gemessenen Wert des übergetretenen Anteils des Signalpegels entspricht.

Ein derartiges Verfahren ist an sich bekannt und in GB-A 2 076 262 beschrieben.

Das bekannte Verfahren hat den Nachteil, daß bei der Anpassung nur die Eigenschaften der Gabelschaltung selbst berücksichtigt werden und andere Eigenschaften der Gesamtschaltung unberücksichtigt bleiben. Insbesondere bleiben Fehlanpassungen unberücksichtigt, die dadurch zustande kommen, daß an den beiden von der Gabelschaltung abgewandten Enden der Nebenzweige eine Kopplung auftreten kann, bei der eine Phasendrehung des von einem Nebenzweig in den anderen Nebenzweig der Gabelschaltung rückgekoppelten Signals auftreten kann, die frequenzabhängig ist. Dies hat zur Folge, daß bei einer Anpassung der Gabelschaltung nach dem oben erwähnten bekannten Verfahren, oder nach den älteren Verfahren gemäß der europäischen Patentanmeldung Nr. 8 5102 300.2 (Veröffentlichungs-Nr. 0 155 570 veröffenlicht am 25.9.1985) sowie mit Einrichtungen nach den europäischen Patentanmeldungen Nr. 85 102 301.0 (Veröffentlichungs-Nr. 0 155 571 veröffentlicht am 25.9.1985) und Nr. 85 112 073.3 (Veröffentlichungs-Nr. 0 181 469, veröffentlicht am 21.5.1986) nicht immer zu optimalen Ergebnissen führen, weil bei bestimmten Frequenzen aus den oben erwähnten Gründen noch starke Fehlanpassungen vorliegen können, was zur Folge hat, daß die Gabelverstärkerschaltung bei bestimmten Frequenzen wegen Schwingungsneigung in dem erzielbaren Verstärkungsgrad begrenzt bleibt.

Die der Erfindung zugrunde liegende Aufgabe bestand darin, ausgehend von den bekannten und älteren Verfahren, ein Verfahren zur Anpassung einer Gabelverstärkerschaltung an eine Fernmeldeleitung zu schaffen, bei dem die übrigen Teile der Gesamtschaltung und eine Kopplung der beiden von der Gabelschaltung abgewandten Nebenzweige mit berücksichtigt werden, so daß eine optimale Anpassung über einen vorgegebenen Frequenzbereich möglich wird.

Die Lösung dieser Aufgabe geschieht mit den Merkmalen aus dem kennzeichnenden Teil des Patentanspruchs 1.

Vorteilhafte Ausführungsformen des erfindungsgemäßen Verfahrens sowie Einrichtungen zur Durchführung des Verfahrens sind in den Unteransprüchen beschrieben.

Das erfindungsgemäße Verfahren kann mittels einer in der Gabelverstärkung fest installierten Anpassungsschaltung, die einen Mikrocomputer aufweist, durchgeführt werden. Es ist aber auch möglich, das erfindungsgemäße Verfahren mit einer Einrichtung durchzuführen, die jeweils nur zum Zwecke der Anpassung kurzzeitig an die Gabelverstärkerschaltung angeschlossen wird.

Ausführungsbeispiele zur Erläuterung des erfindungsgemäßen Verfahrens und der hierzu verwendbaren Einrichtungen sind in den Zeichnungen dargestellt.

In den Zeichnungen zeigen:

Fig. 1 in einem Prinzipschaltbild eine bidirektionale Gabelverstärkerschaltung mit einer fest installierten Einrichtung zu ihrer Anpassung an eine Fernmeldeleitung;

Fig. 2 in einer Darstellung analog Fig. 1 eine mit einer Gabelverstärkerschaltung versehene Sprecheinrichtung;

Fig. 3a und 3b eine mit einer Gabelverstärkerschaltung versehene Sprecheinrichtung, bei der die Anpassung mit einer nicht fest installierten Einrichtung zur Durchführung des Anpassungsverfahrens vorgenommen werden kann.

Fig. 4 in einer graphischen Darstellung die Änderung der Gabelübergangsdämpfung in Abhängigkeit von der Frequenz für zwei verschiedene Anpassungsverfahren;

Fig. 5 ein Nachbildungsnetzwerk zur Verwendung bei den Ausführungen nach einer der Fig. 1 oder 2.

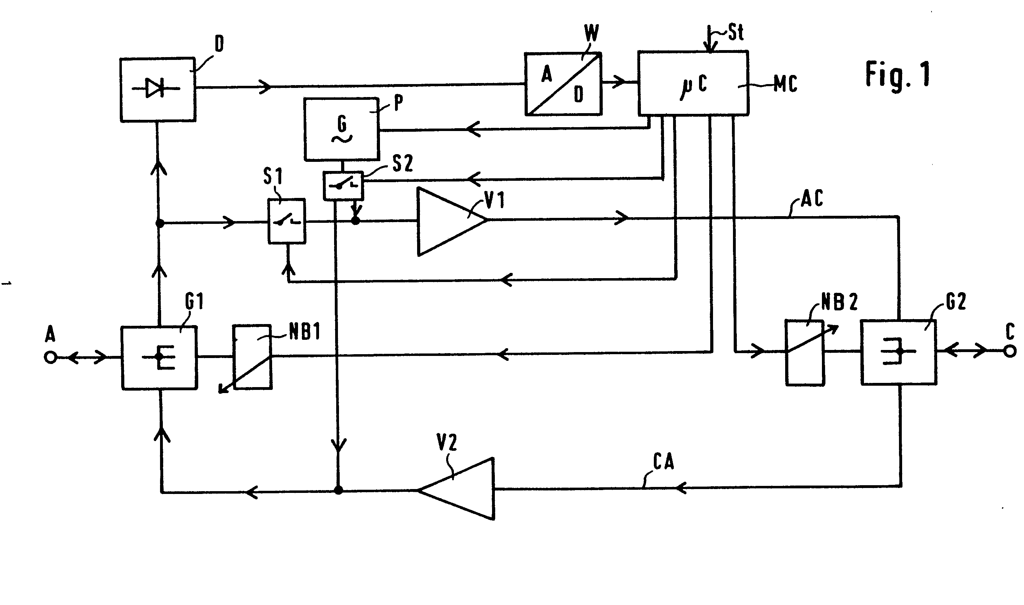

Die Einrichtung nach Fig. 1 weist eine Gabelverstärkerschaltung mit den Gabelschaltungen G1 und G2 und dem von einem Teilnehmer A zu einem Teilnehmer C führenden Zweig AC und einem vom Teilnehmer C zum Teilnehmer A führenden Zweig CA einer Fernmeldeleitung auf. Im Zweig AC befindet sich ein Verstärker V1, während im Zweig CA ein Verstärker V2 angeordnet ist.

Bei der Gabelschaltung G1 ist an der dem bidirektionalen, zum Teilnehmer A führenden Hauptzweig gegenüberliegenden Seite ein Nachbildungsnetzwerk NB1 angeordnet, dessen Impedanzwerte in weiter unten näher erläuterter Weise von einem Mikrocomputer MC her einstellbar sind. Ebenso ist an der dem bidirektionalen, zum Teilnehmer C führenden Hauptzweig der Gabelschaltung G2 gegenüberliegenden Seite ein Nachbildungsnetzwerk NB2 angeordnet, dessen Impedanzwerte ebenfalls vom Mikrocomputer MC her einstellbar sind.

Der Mikrocomputer MC steuert gleichzeitig einen im Leitungszweig AC zwischen der Gabelschaltung G1 und dem Verstärker V1 angeordneten ansteuerbaren Schalter S1, durch den dieser Leitungszweig unterbrochen werden kann. Weiterhin steuert er einen Signalgenerator P, der über einen vom Mikrocomputer MC her ansteuerbaren Umschalter S2 einerseits an einen Punkt des Leitungszweiges AC zwischen dem Schalter S1 und dem Verstärker V1 und andererseits an einen Punkt des Leitungszweiges CA zwischen dem Verstärker V2 und der Gabelschaltung G1 angeschlossen ist. Weiterhin ist der Leitungszweig AC zwischen der Gabelschaltung G1 und dem Schalter S1 über einen als Spitzenwertgleichrichter ausgebildeten Signalempfänger D und einen Analog-Digital-Wandler W an den Mikrocomputer MC angeschlossen. Die Ansteuerung des Mikrocomputers MC erfolgt über einen Starteingang St.

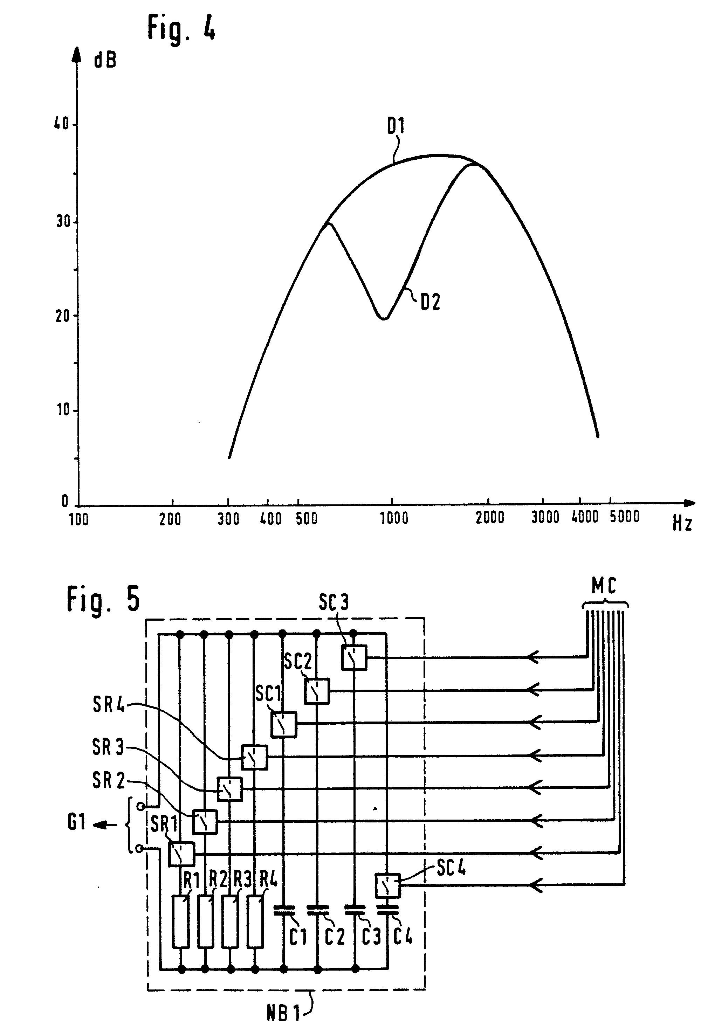

In den Nachbildungsnetzwerken NB1 und NB2 sind wie in Fig. 5 dargestellt (s. auch DE-OS 3 409 879) beispielsweise vier Widerstände R1 bis R4 und vier Kondensatoren C1 bis C4 angeordnet, die alle zueinander parallelgeschaltet sind. In jeden der zu einem der Widerstände oder Kondensatoren führenden Parallelzweige ist ein steuerbares Schaltelement SR1 bis SR4 bzw. SC1 bis SC4 eingeschaltet. Die Steuereingänge dieser steuerbaren Schaltelemente sind mit Steuerausgängen des Mikrocomputers MC verbunden.

Soll nun beispielsweise bei Beginn eines Gespräches zwischen den Teilnehmern A und C die Gabelverstärkerschaltung optimal an die Fernmeldeleitung angepaßt werden, so wird zunächst der Leitungszweig AC mittels des Schalters S1 vom Mikrocomputer MC her unterbrochen. Es wird dann ebenfalls, gesteuert vom Mikrocomputer MC aus, über den Schalter S2 vom Signalgenerator P ein Prüfsignal zunächst in den Leitungszweig CA gegeben. Gleichzeitig wird am Nachbildungsnetzwerk NB1 vom Mikrocomputer MC aus eine bestimmte vorgegebene Kombination aus Widerständen und Kondensatoren eingestellt. Ein Teil des vom Signalgenerator P abgegebenen Signalpegels wird nun infolge der begrenzten Gabelübergangsdämpfung der Gabelschaltung G1 in den Leitungszweig AG gelangen. Dieser Signalpegelanteil wird vom Spitzenwertgleichrichter D empfangen und dem Analog-Digital-Wandler W zugeführt, der den Signalwert in einen Digitalwert umwandelt und dem Mikrocomputer MC zuführt. Es werden nun taktweise die an dem Nachbildungsnetzwerk NB1 eingestellten Kombinationen aus Widerstandswerten und Kapazitätswerten verändert und jeweils der in der oben beschriebenen Weise bis zum Spitzenwertgleichrichter D zurücklaufende Anteil des Signalpegels gemessen und dieser Meßwert dem Mikrocomputer MC zugeführt. Die eintreffenden Meßwerte werden miteinander verglichen und bestimmte vorgegebene Meßwerte werden gespeichert. Schließlich wird der Minimalwert bestimmter gemessener Signalpegelanteile ermittelt. Diesem Minimalwert ist eine bestimmte am Nachbildungsnetzwerk NB1 einstellbare Kombination aus Widerständen und Kondensatoren zugeordnet. Diese dem minimalen Meßwert des Signalpegelanteils entsprechende Kombination kann nun vom Mikrocomputer aus eingestellt werden. Nach dieser Einstellung ist zunächst die Gabelschaltung G1 an die Fernmeldeleitung angepaßt.

Es wird nunmehr in einem zweiten Anpassungsverfahren der Schalter S2 umgesteuert und das Prüfsignal in den Leitungszweig AC auf den Eingang des Verstärkers V1 gegeben und gleichzeitig am Nachbildungsnetzwerk NB2 vom Mikrocomputer MC aus eine bestimmte vorgegebene Kombination aus Widerständen und Kondensatoren eingestellt. Ein Teil des vom Signalgenerator P abgegebenen Signalpegels wird nun infolge der begrenzten Gabelübergangsdämpfung zunächst an der Gabelschaltung G2 in den anderen Leitungszweig CA übertreten, wird vom Verstärker V2 verstärkt und läuft zurück zur Gabelschaltung G1, wo wiederum ein durch die immer noch begrenzte Gabelübergangsdämpfung dieser Gabelschaltung bestimmter Anteil des Signalpegels zurück in den Leitungszweig AC gelangt. Dieser Signalpegelanteil wird wiederum vom Spitzenwertgleichrichter D empfangen und über den Analog-Digital-Wandler W dem Mikrocomputer MC zugeführt. Es werden nun in analoger Weise wie beim ersten Anpassungsverfahren die an dem Nachbildungsnetzwerk NB2 eingestellten Kombinationen aus Widerstandswerten und Kapazitätswerten verändert und schließlich der dem nunmehr gemessenen Minimalwert des übergetretenen Signalpegelanteils entsprechende Impedanzwert vom Mikrocomputer aus eingestellt.

Erst nach diesem zweiten Anpassungsverfahren ist die Gabelverstärkerschaltung insgesamt optimal an die Fernmeldeleitung angepaßt. Der Schalter S1 kann nun wieder geschlossen werden und ein Gespräch kann beginnen.

Als Prüfsignal wird zweckmäßigerweise ein Tonfrequenzsignal verwendet, das aus einem vorgegebenen Frequenzspektrum, das sich über den ganzen Übertragungsbereich erstreckt, besteht. Es hat sich als sehr vorteilhaft erwiesen, hier Frequenzen zu verwenden, die in dem an sich bekannten CCITT-Raster enthalten sind, beispielsweise die Frequenzen 300 Hz, 540 Hz, 1020 Hz, 1980 Hz und 3300 Hz.

Selbstverständlich können auch andere Frequenzen verwendet werden.

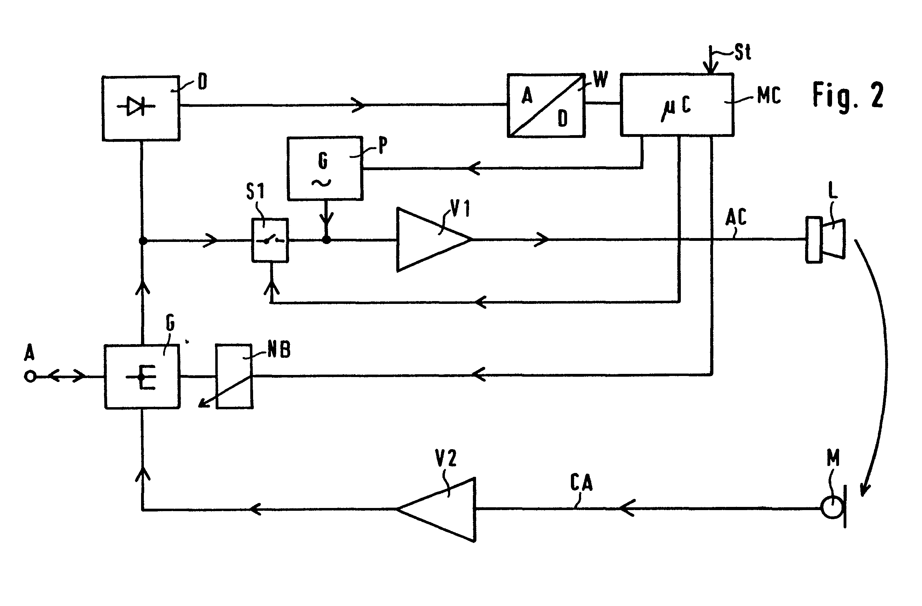

Die in Fig. 2 dargestellte Gabelverstärkerschaltung unterscheidet sich von der in Fig. 1 dargestellten Schaltung dadurch, daß die beiden Leitungszweige AC und CA nicht über eine weitere Gabelverstärkerschaltung miteinander gekoppelt sind, sondern an ihren Enden jeweils einen Lautsprecher L bzw. ein Mikrofon M aufweisen. Es handelt sich hier also um eine Sprecheinrichtung, bei der, wenn Lautsprecher L und Mikrofon M gleichzeitig eingeschaltet sind, eine Kopplung über den Luftraum zwischen den beiden Leitungszweigen AC und CA stattfindet.

Das Meßverfahren kann in analoger Weise durchgeführt werden wie anhand der Schaltung nach Fig. 1 im zweiten Verfahrensabschnitt beschrieben. Das Prüfsignal wird dem Eingang des Verstärkers V1 zugeführt und gelangt über den Zweig AC zum Lautsprecher L. Der abgestrahlte Ton wird vom Mikrofon M aufgenommen und gelangt über den Zweig CA und den Verstärker V2 zurück zur Gabelschaltung G. Anhand des vom Spitzenwertgleichrichters D gemessenen Signalpegelanteils wird vom Mikrocomputer MC aus das Nachbildungsnetzwerk NB optimal eingestellt und damit eine optimale Gabelübergangsdämpfung erreicht, welche die Koppelung über den Luftraum zwischen dem Lautsprecher L und dem Mikrofon M und die hier eventuell auftretenden Phasendrehungen mit berücksichtigt.

Auch hier kann die Messung mit dem oben beschriebenen, aus einem vorgegebenen Frequenzspektrum bestehenden Tonfrequenzsignal durchgeführt werden.

Zur Veranschaulichung des Unterschiedes in der optimalen Anpassung, je nachdem ob die Anpassung nur nach dem beispielsweise aus DE-OS 3 409 879 bekannten älteren Verfahren oder nach dem oben beschriebenen Verfahren durchgeführt wird, dient Fig. 4.

Fig. 4 zeigt in qualitativer grafischer Darstellung das Ergebnis einer Anpassung, die bei einer Schaltung nach Fig. 2 durchgeführt wurde. Dabei wurde jeweils der Signalpegel in Abhängigkeit von der Frequenz aufgetragen, der mit Hilfe des Spitzenwertgleichrichters D im Nebenzweig AC der Gabel G gemessen wurde. Das Signalpegelverhältnis wird in Dezibel angegeben. Die Kurve D1 zeigt die Verhältnisse bei Durchführung des älteren Anpassungsverfahrens, bei dem ein Prüfsignal direkt dem anderen Nebenzweig CA der Gabelschaltung G zugeführt wird und das Nachbildungsnetzwerk NB entsprechend eingestellt wird. Die Kurve D2 zeigt die Verhältnisse nach Durchführung des anhand von Fig. 2 beschriebenen Verfahrens, bei dem das Prüfsignal direkt dem Eingang des Verstärkers V1 zugeführt wird, und die Koppelung über den Lautsprecher L und das Mikrofon M mit berücksichtigt wird. Es wird hier also nicht nur die Gabelübergangsdämpfung der Gabelschaltung G, sondern die sogenannte Umlaufdämpfung durch Anpassung am Nachbildungsnetzwerk NB optimalisiert. Dabei spielt vor allem die am Lautsprecher und dem Luftweg zwischen Lautsprecher und Mikrofon auftretende Phasendrehung eine Rolle. Es ist am Vergleich der beiden Kurven D1 und D2 deutlich zu erkennen, daß in einem wichtigen Frequenzbereich in der Nähe von 1000 Hz eine deutliche Verbesserung der Umlaufdämpfung um bis zu 15 dB erzielt wird.

Ähnliche Ergebnisse erhält man bei entsprechenden Vergleichsmessungen an bidirektionalen Verstärkerschaltungen nach Fig. 1.

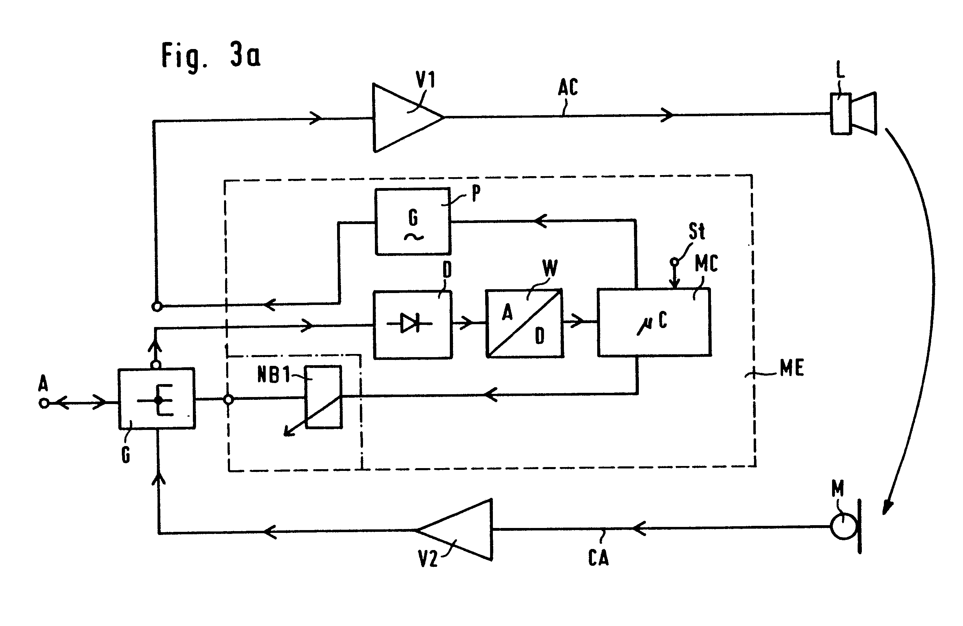

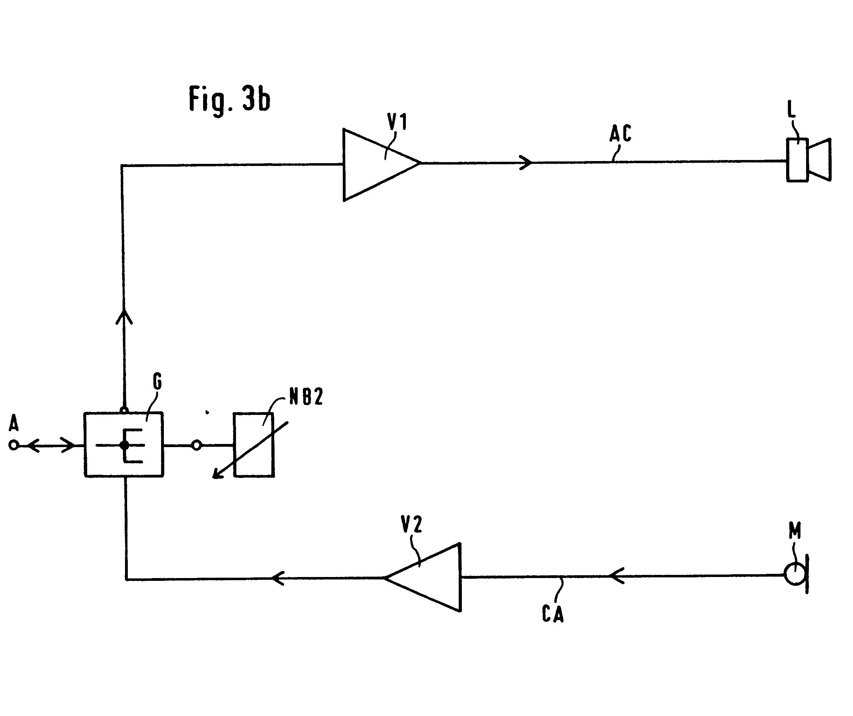

In den Fig. 3a und 3b ist eine Einrichtung dargestellt, die nicht fest mit einer Sprecheinrichtung verbunden zu sein braucht.

Die Gabelverstärkerschaltung weist eine Gabelschaltung G auf, in deren einem Nebenzweig AC der Verstärker V1 und ein Lautsprecher L und in deren anderem Nebenzweig ein Verstärker V2 und ein Mikrofon M angeordnet sind.

Die zur Durchführung des Verfahrens zur Anpassung der Gabelschaltung erforderlichen Einrichtungen sind in einer Meßeinrichtung ME zusammengefaßt, die den Mikrocomputer MC, den Signalgenerator P, den Spitzenwertgleichrichter D, den Analog-Digital-Wandler W sowie ein einstellbares ansteuerbares Nachbildungsnetz NB1 enthält. Die Meßeinrichtung ME wird unter Auftrennung des Leitungszweiges AC direkt an die Gabelschaltung G in der aus Fig. 3a ersichtlichen Weise angeschlossen. Das Meßverfahren wird in der bereits beschriebenen Weise durchgeführt, wobei die Meßeinrichtung ME so ausgebildet ist, daß der am Nachbildungsnetzwerk NB1 eingestellte optimale Impedanzwert an einer Anzeigeeinrichtung abgelesen werden kann. Dieser Wert kann dann an einem ebenfalls einstellbaren Nachbildungsnetzwerk NB2 fest eingestellt werden und dieses Nachbildungsnetzwerk NB2 dient dann in der aus Fig. 3b ersichtlichen Weise zum Abschluß der Gabelschaltung G. Derartige einstellbare Nachbildungsnetzwerke sind beispielsweise in der älteren DE-OS 3 409 877 beschrieben.

Selbstverständlich ist es auch möglich (s. hierzu DE-OS 3 440 591) das Nachbildungsnetzwerk NB1 in der strichpunktiert in Fig. 3a angedeuteten Weise als Einschubteil innerhalb der Meßeinrichtung ME auszubilden. Es kann dann nach Einstellung des optimalen Impedanzwertes aus der Meßeinrichtung ME herausgenommen und direkt an die Gabelschaltung G angeschlossen werden.

**Patentansprüche**

1. Verfahren zur Anpassung einer Gabelverstärkerschaltung an eine Fernmeldeleitung, bei welcher die mit ihrem bidirektionalen Hauptzweig an die Fernmeldeleitung angeschlossene Gabelschaltung (G; G1) an ihrer dem Hauptzweig gegenüberliegenden Seite mit einem Nachbildungsnetzwerk abgeschlossen ist, das einstellbare Impedanzen enthält und bei der in jedem der beiden Nebenzweige (AC, CA) eine Verstärkerschaltung (V1, V2) angeordnet ist und die beiden Nebenzweige an ihren von der Gabelschaltung abgewandte Enden gekoppelt sind, bei welchem dem einen Nebenzweig (AC) der Gabelschaltung ein Prüfsignal zugeführt wird und der in den anderen Nebenzweig (CA) der Gabelschaltung in Abhängigkeit von der Gabelübergangsdämpfung übertretende Anteil des Signalpegels fortlaufend gemessen wird, wobei vor jeder Messung die einstellbaren Impedanzen in vorgegebener Weise auf einen anderen Wert eingestellt werden und die erhaltenen Meßwerte des übergetretenen Anteils des Signalpegels miteinander verglichen und den entsprechenden Impedanzwerten zugeordnet werden und nach einer vorgegebenen Anzahl von Messungen das Nachbildungsnetzwerk auf einen Impedanzwert fest eingestellt wird, der dem kleinsten gemessenen Wert des übergetretenen Anteils des Signalpegels entspricht, dadurch gekennzeichnet, daß der das abgehende Signal führende Nebenzweig (AC) der Gabelschaltung (G, G1) für die Dauer der Anpassung zwischen Gabelschaltung (G, G1) und Verstärkerschaltung (V1) unterbrochen wird, wobei die Messung des übergetretenen Anteils des Signalpegels vor der Unterbrechungsstelle (S1) und die Einspeisung eines Prüfsignals mit konstantem Signalpegel nach der Unterbrechungsstelle (S1) im gleichen Nebenzweig (AC) so erfolgt, daß das Prüfsignal durch die Verstärkerschaltung (V1) dieses Nebenzweigs (AC) über die Kopplung (G2; L - M) in den anderen Nebenzweig (CA) und durch die Verstärkerschaltung (V2) des anderen Nebenzweiges (CA) zurück zur Gabelschaltung (G, G1) geführt wird.

2. Verfahren nach Anspruch 1, dadurch gekennzeichnet, daß die Kopplung der beiden Nebenzweige (AC, CA) der Gabelschaltung (G1) an ihren von der Gabelschaltung abgewandten Enden über eine weitere Gabelschaltung (G2) erfolgt.

3. Verfahren nach Anspruch 1, dadurch gekennzeichnet, daß die Kopplung der beiden Nebenzweige (AC, CA) der Gabelschaltung (G) an ihren von der Gabelschaltung abgewandten Enden über den Luftraum erfolgt, indem ein am Ende des einen Nebenzweiges (AC) angeordneter Lautsprecher (L) und ein am Ende des anderen Nebenzweiges (CA) angeordnetes Mikrofon (M) gleichzeitig eingeschaltet sind.

4. Verfahren nach Anspruch 2, dadurch gekennzeichnet, daß zur Anpassung einer in eine Fernmeldeleitung eingeschalteten, zwei gegeneinandergeschaltete Gabelschaltungen (G1, G2) aufweisenden bidirektionalen Verstärkerschaltung an die Fernmeldeleitung der das abgehende Signal führende Nebenzweig (AC) der einen Gabelschaltung (G1) für die Dauer der Anpassung unterbrochen wird und dann zunächst ein erstes Anpassungsverfahren für diese Gabelschaltung (G1) durchgeführt wird, indem das Prüfsignal dem das ankommende Signal führenden Nebenzweig (CA) dieser Gabelschaltung (G1) zugeführt wird und der in den das abgehende Signal führenden Nebenzweig (AC) dieser Gabelschaltung (G1) übertretende Anteil des Signalpegels gemessen und das Nachbildungsnetzwerk (NB1) dieser Gabelschaltung (G1) auf den Impedanzwert eingestellt wird, der dem kleinsten gemessenen Wert des übergetretenen Signalpegels entspricht und daß dann ein zweites Anpassungsverfahren durchgeführt wird, indem das Prüfsignal dem das abgehende Signal führende Nebenzweig (AC) nach der Unterbrechungsstelle (S1) zugeführt wird und wiederum der in diesen Nebenzweig (AC) vor der Unterbrechungsstelle (S1) über die beiden Gabelschaltungen (G2 - G1) übertretenden Anteil des Signalpegels gemessen und das Nachbildungsnetzwerk (NB2) der anderen Gabelschaltung (G2) auf den Impedanzwert eingestellt wird, der dem kleinsten gemessenen Wert des übergetretenen Signalpegels entspricht.

5. Verfahren nach einem der Ansprüche 1 bis 4, dadurch gekennzeichnet, daß als Prüfsignal ein aus einem vorgegebenen Frequenzspektrum bestehendes Tonfrequenzsignal dient.

6. Verfahren nach Anspruch 5, dadurch gekennzeichnet, daß das Frequenzspektrum die Frequenzen 300 Hz, 540 Hz, 1020 Hz, 1980 Hz und 3300 Hz enthält.

7. Einrichtung zur Durchführung des Verfahrens nach Anspruch 1 mit einem Mikrocomputer (MC), der über Steuerelemente mit den einstellbaren Impedanzen eines die Gabelschaltung (G; G1) an ihrer dem Hauptzweig gegenüberliegenden Seite abschließenden Nachbildungsnetzwerks verbunden ist und dessen Steuersignale den Wert der Gesamtimpedanz in vorgegebener Weise ändern und bei der der das abgehende Signal führende Nebenzweig (AC) der Gabelschaltung mit dem Eingang eines Signalempfängers (D) verbunden ist, dessen Ausgang ein vom gemessenen Signalpegel abhängiges Steuersignal abgibt, das über einen Analog-Digital-Wandler (W) dem Mikrocomputer (MC) zugeführt wird zum Vergleich aufeinanderfolgender Meßwerte, zur Speicherung des Minimalmeßwertes und zur Steuerung der Gesamtimpedanz des Nachbildungsnetzwerkes auf dem Minimalwert entsprechenden Impedanzwert und bei der ein vom Mikrocomputer her angesteuerter Signalgenerator (P) vorhanden ist, dadurch gekennzeichnet, daß die beiden Nebenzweige (AC, CA) der Gabelschaltung (G1) durch Kopplung (G2; L - M) miteinander verbunden sind und in dem das abgehende Signal führende Nebenzweig (AC) der Gabelschaltung (G1) ein vom Mikrocomputer (MC) her ansteuerbarer, diesen Nebenzweig unterbrechender Schalter (S1) angeordnet ist und der Signalempfänger (D) vor dem Schalter (S1) und der Signalgenerator (P) hinter dem Schalter (S1) an diesen Nebenzweig (AC) angeschlossen ist.

8. Einrichtung nach Anspruch 7 in einer bidirektionalen Verstärkerschaltung mit zwei gegeneinander geschalteten Gabelschaltungen, dadurch gekennzeichnet, daß die Koppelung der beiden Nebenzweige (AC, CA) der ersten Gabelschaltung (G1) über die zweite Gabelschaltung (G2) erfolgt und der Signalgenerator (P) über einen vom Mikrocomputer (MC) her ansteuerbaren Umschalter (S2) wahlweise mit dem das abgehende Signal führenden Nebenzweig (AC) oder dem das ankommende Signal führenden Nebenzweig (CA) der ersten Gabelschaltung (G1) verbindbar ist.

9. Einrichtung nach Anspruch 7 oder 8, dadurch gekennzeichnet, daß das die Gabelschaltung (G1, G2) abschließende Nachbildungsnetzwerk (NB1, NB2) eine vorgegebene Anzahl zueinander parallelgeschalteter Ohm'scher Widerstände (R1 bis R4) und Kondensatoren (C1 bis G4) aufweist, wobei in der Zuleitung zu jedem der Widerstände und jedem der Kondensatoren ein mit dem Mikrocomputer (MC) verbundenes steuerbares Schaltelement (SR1 bis SR4, SC1 bis SC4) angeordnet ist.

**Claims**

1. A process for matching a termination amplifier circuit to a telecommunications line, in which the termination circuit (G, G1), whose bidirectional main branch is connected to the telecommunications line, is terminated at the side opposite the main branch by a balancing circuit containing adjustable impedances; each secondary branch (AC, CA) of the termination circuit (G, G1) containing an amplifier (V1, V2); the two secondary branches (AC, CA) being coupled together at their ends away from the termination circuit (G, G1); a test signal being applied to one secondary branch (AC) of the termination circuit; the portion of the test signal level passing through to the other secondary branch (CA) due to the termination transition damping being continually measured; the adjustable impedances being adjusted, before the measurement, in a previously specified manner, to a different value; the signal levels of said passing through portions of successive test signals being compared with each other and the corresponding impedances calculated; the measurements being repeated a previously specified number of times, after which the balancing circuit is adjusted to the impedance corresponding to the least signal level in said pass-through portion of the test signal, and fixed at this adjustment, characterised in that throughout the matching process the secondary branch (AC) of the termination circuit (G, G1) which carries the outgoing signal is interrupted at a point (S1) between the termination circuit (G, G1) and the amplifier (V1); said passing through portion of the signal level being measured ahead of the interruption point (S1); a test signal of constant level being fed to the same secondary branch (AC) following the interruption point (S1); so that the test signal flows through the amplifier (V1) in this secondary branch (AC) and through the coupling (G1, LM) to the other secondary branch (CA) and then through the amplifier (V2) in the other secondary branch (CA) back to the termination circuit (G, G1).

2. Process as claimed in Claim 1, characterised in that the two secondary branches (AC) and (CA) of the termination circuit (G, G1) are coupled together at their ends away from the termination circuit (G, G1) by a second termination circuit (G2).

3. Process as claimed in Claim 1, characterised in that the two secondary branches (AC) and (CA) of the termination circuit (G) are coupled together at their ends away from the termination circuit (G), over an air-gap; one of the secondary branches (AC) terminating in a loudspeaker (L), the other (CA) terminating in a microphone (M); both being switched-on simultaneously.

4. Process as claimed in Claim 2, characterised in that for matching a bidirectional amplifier circuit interposed in a telecommunications line, the amplifier circuit having two counter-connected termination circuits (G1, G2), the secondary branch (AC) of the termination circuit (G1) which carries the outgoing signal is interrupted throughout the matching process; the matching process being done in two successive stages, the first for this termination circuit (G1); a test signal being applied, in this first stage of the matching process, to the secondary branch (CA) of this termination circuit (G1), which carries the incoming signal; the portion of the signal pass through to the other secondary branch (AC) of this termination circuit (G1), which carries the outgoing signal, being measured; and the balancing circuit (NB1) of this termination circuit (G1) adjusted to the impedance corresponding to the least measured value of said passing through portion of the signal; after which the second stage of the matching process takes place; in that the test signal is now applied to the secondary branch (AC) which carries the outgoing signal, following the interruption point (S1); the portion of the signal passing through to this secondary branch (AC) ahead of the interruption point (S1), over the two termination circuits (G1, G2) being measured; and the balancing circuit (NB2) of the other termination circuit (G2) adjusted to the impedance corresponding to the least measured value of the passing through portion of the signal.

5. Process as claimed in one of the Claims 1 to 4, characterised in that the test signal is an audio-frequency signal selected from a previously specified frequency spectrum.

6. Process as claimed in Claim 5, characterised in that the frequency spectrum contains the frequencies: 300 Hz, 540 Hz, 1010 Hz, 1980 Hz and 3300 Hz.

7. Device for performing the process of Claim 1, with a micro-computer (MC) connected over control devices to the adjustable impedances of a balancing circuit which terminates the termination circuit (G, G1) at the side away from the main branch; and whose control signals change the total impedance in a previously specified manner; the secondary branch (AC) of the termination circuit which carries the outgoing signal being connected to the input terminal of a signal receiver (D); whose output terminal delivers a control signal responsive to the measured signal level; the control signal being fed, over an analog-to-digital converter (W), to the micro-computer (MC) for comparing successive measured values, for storing the least measured value in a memory and for adjusting the total impedance of the balancing circuit to the impedance corresponding to the least value; the device having a signal generator (P) controlled by the micro-computer; characterised in that the two secondary branches (AC, CA) of the termination circuit (G1) are connected together by a coupling (G1, LM); the secondary branch (AC) of the termination circuit (G1) which carries the outgoing signal containing a switch (S1) controlled by the micro-computer (MC), the switch (S1) interrupting the secondary branch (AC); the signal receiver (D) being connected ahead of the switch (S1) in the secondary branch (AC), the signal generator (P) following it.

8. Device as claimed in Claim 7, in a bidirectional amplifier circuit with two counter-connected termination circuits, characterised in that the two secondary branches (AC, CA) of the termination circuit (G1) are coupled together over the second termination circuit (G2); the signal generator (P) being selectively connectable, over a switch (S2) controlled by the micro-computer (MC), either to the secondary branch (AC) of the first termination circuit (G1) carrying the outgoing signal, or to the secondary branch (CA) carrying the incoming signal.

9. Device as claimed in Claims 7 or 8, characterised in that the balancing circuit (NB1, NB2) terminating the termination circuit (G1, G2) contains a previously specified number of parallel-connected resistors (R1 to R4) and capacitors (C1 to C4); there being interposed in the lead to each resistor and each capacitor a switch (SR1 to SR4 and SC1 and SC4) controlled by the micro-computer (MC).

**Revendications**

1. Procédé pour l'adaptation d'un montage à fourche à une ligne de télécommunication sur laquelle le circuit en fourche (G; G1) connecté par sa branche principale bidirectionnelle à la ligne de télécommunication est terminé sur son côté faisant face à ladite branche principale au moyen d'un circuit équilibreur qui contient des impédances réglables, ledit montage amplificateur à fourche comprenant dans chacune des deux branches secondaires (AC, CA) un circuit d'amplificateur (V1, V2), ces deux branches secondaires étant accouplées sur leurs extrémités opposées au montage des fourches, à l'une des branches secondaires (AC) dudit montage à fourche, un signal de contrôle étant amené et la partie du niveau du signal interférant dans l'autre branche secondaire (CA) du montage étant mesurée de manière continue en fonction de l'amortissement transitoire de la fourche, tandis qu'avant chaque mesure les impédances réglables sont réglées sur une autre valeur, d'une manière prédéterminée, et les valeurs mesurées obtenues de la partie du niveau du signal ayant interféré étant comparées les unes aux autres et attribuées aux valeurs d'impédance correspondantes et, après un nombre prédéterminé de mesures, le circuit équilibreur étant réglé définitivement sur une valeur d'impédance qui correspond à la valeur mesurée la plus faible de la partie interférante du niveau du signal, caractérisé par le fait que la branche secondaire (AC) du montage (G, G1) conduisant le signal de sortie est interrompue pendant la durée de l'adaptation entre le montage (G, G1) et un montage amplificateur (V1), la mesure de la partie interférante du niveau du signal s'effectuant avant le point d'interruption (S1) et l'introduction d'un signal de contrôle à niveau constant après ce point d'interruption (S1) dans la même branche secondaire (AC) de telle manière que le signal de contrôle soit reconduit vers le montage (G, G1) par le circuit amplificateur (V1) de cette branche secondaire (AC) en passant par le couplage (G2; L - M) dans l'autre branche secondaire (CA) et par le circuit amplificateur (V2) de l'autre branche secondaire (CA).

2. Procédé selon la revendication 1, caractérisé par le fait que le couplage des deux branches secondaires (AC, CA) du montage en fourche (G1) s'effectue sur leurs extrémités opposées au montage en fourche en passant par un autre montage en fourche (G2).

3. Procédé selon la revendication 1, caractérisé par le fait que le couplage des deux branches secondaires (AC, CA) du montage en fourche (G) s'effectue sur leurs extrémités opposées au montage en fourche en passant par l'atmosphère, par la connexion simultanée d'un haut-parleur (L) disposé à l'extrémité de l'une des branches secondaires (AC) et d'un microphone (M) disposé à l'extrémité de l'autre branche secondaire (CA).

4. Procédé selon la revendication 2, caractérisé par le fait que, pour l'adaptation d'un montage amplificateur bidirectionnel, monté dans une ligne de télécommunication et présentant deux montages en fourche (G1, G2) montés en opposition, à la ligne de télécommunication, la branche secondaire (AC) de l'un des montages en fourche (G1), branche conduisant le signal de sortie, étant étant interrompue pendant la durée de l'adaptation, et ensuite une première procédure d'adaptation étant effectuée pour ce montage en fourche (G1) par le fait que le signal de contrôle est amené vers la branche secondaire (CA) qui conduit le signal à l'arrivée et que la partie du niveau du signal passant dans la branche secondaire (AC) qui conduit le signal à la sortie est mesurée et que le circuit équilibreur (NB1) de ce montage en fourche (G1) est réglé sur la valeur d'impédance qui correspond à la valeur mesurée la plus faible de ce niveau de signal et que, ensuite, est effectuée une deuxième procédure d'adaptation par le fait que le signal de contrôle est amené dans la branche secondaire (AC) conduisant le signal de sortie en aval du point d'interruption (S1) et qu'à son tour la partie du niveau du signal transférée dans cette branche secondaire (AC) en amont du point d'interruption (S1), en passant à travers les deux montages en fourche (G2, G1) et le circuit équilibreur (NB2) de l'autre montage en fourche (G2) étant réglée sur la valeur d'impédance qui correspond à la valeur mesurée la plus faible du niveau du signal transferré.

5. Procédé selon l'une des revendications 1 à 4, caractérisé par le fait qu'un signal de fréquence sonore à spectre de fréquences prédéterminées sert de signal de contrôle.

6. Procédé selon la revendication 5, caractérisé par le fait que le spectre de fréquences contient les fréquences de 300 Hz, 540 Hz, 1020 Hz, 1980 Hz et 3300 Hz.

7. Dispositif pour la mise en oeuvre du procédé selon la revendication 1, comprenant un micro-ordinateur (MC) qui est relié par des éléments de commande aux impédances réglables d'un montage équilibreur terminant le montage en fourche (G; G1) sur son côté faisant face à la branche principale et dont les signaux de commande modifient la valeur de l'impédance totale d'une manière prédéterminée et avec lequel la branche secondaire (AC) du montage en fourche qui conduit le signal de sortie est reliée à l'entrée d'un récepteur de signaux (D) dont la sortie émet un signal de commande dépendant du niveau du signal mesurée, signal de commande qui est amené au micro-ordinateur (MC) par un convertisseur (W) analogique-numérique afin de comparer des valeurs mesurées consécutives, de mettre en mémoire la valeur mesurée minimale et de piloter l'impédance totale du circuit équilibreur en tenant compte de la valeur d'impédance correspondant à la valeur minimale et en prévoyant la présence d'un générateur (P) de signaux piloté par le micro-ordinateur, caractérisé par le fait que les deux branches secondaires (AC, CA) du montage en fourche (G1) sont assemblées par le couplage (G2; L - M) et que dans la branche secondaire (AC) qui conduit le signal de sortie est disposée un interrupteur (S1) qui interrompt cette branche secondaire et qui peut être commandé par le micro-ordinateur (MC) et que le récepteur de signaux (D) est connecté sur cette branche secondaire (AC) en amont de l'interrupteur (S1) et que le générateur de signaux (P) est connecté à la même branche secondaire (AC) en aval de l'interrupteur (S1).

8. Dispositif selon la revendication 7, dans un montage amplificateur bidirectionnel comprenant deux circuits en fourche montés en opposition, caractérisé par le fait que le couplage des deux branches secondaires (AC, CA) du premier montage en fourche (G1) s'effectue à travers le deuxième montage en fourche (G2) et que le générateur de signaux (P) peut être relié, au moyen d'un commutateur (S2) pouvant être commandé par le micro-ordinateur (MC), soit à la branche (AC) conduisant le signal de sortie, soit à la branche secondaire (CA) conduisant le signal d'arrivée du premier montage en fourche (G1).

9. Dispositif selon la revendication 7 ou 8, caractérisé par le fait que le circuit équilibreur (NB1, NB2) terminant le montage en fourche (G1, G2) présente un nombre prédéterminé de résistances ohmiques (R1 à R4) montées en parallèles et de condensateurs (C1 à C4), tandis que dans la ligne conduisant vers chacune des résistances et chacun des condensateurs est disposé un élément de commande (SR1 à SR4, SC1 à SC4) relié au micro-ordinateur (MC) et pouvant être piloté par ce dernier.

Fig. 1

Fig. 2

Fig. 3a

EP 0 193 733 B1

Fig. 3b

# Fig. 4

# Fig. 5